# EUROPEAN PATENT SPECIFICATION

(11) **EP 3 503 476 B1**
(45) Date of publication and mention of the grant of the patent: **01.03.2023**
(21) Application number: 18213919.6
(22) Date of filing: 19.12.2018
(51) Int. Cl.: H04L 12/28, H04L 12/00

(54) **METHOD FOR CONTROLLING AN ELECTRONIC VIDEO DOOR ENTRY AND/OR HOME AUTOMATION COMMUNICATION SYSTEM AND ELECTRONIC SYSTEM IMPLEMENTING THE SAME**
VERFAHREN FÜR EIN ELEKTRONISCHES VIDEOTÜREINTRITTSSYSTEM UND/ODER DOMOTIKKOMMUNIKATIONSYSTEM UND ELEKTRONISCHES SYSTEM ZUR IMPLEMENTIERUNG
PROCÉDÉ DE CONTRÔLE D'UNE VIDÉO ÉLECTRONIQUE POUR ENTRÉE DE PORTE ET/OU POUR SYSTEME DE COMMUNICATION D'AUTOMATISATION DOMESTIQUE ET SYSTÈME ÉLECTRONIQUE POUR L'IMPLEMENTATION D'UN TEL SYSTÈME

(30) Priority: 21.12.2017 IT 201700148479
(43) Date of publication of application: 26.06.2019
(73) Proprietor: Comelit Group S.p.a., 24020 Rovetta San Lorenzo (BG) (IT)
(72) Inventor: BARZASI, Edoardo, 24020 Rovetta (BG) (IT); NICOLI, Sergio, 24020 Rovetta (BG) (IT)
(74) Representative: Mati, Silvia

(56) References cited:
- WO-A1-2010/064101
- US-A1- 2008 005 600
- US-A1- 2015 074 259
- Comelit: "Mini ViP Monitor Art. 6722W, Art. 6742W", , 30 November 2017 (2017-11-30), pages 1-10, XP055506922, Retrieved from the Internet: URL:http://pro.comelitgroup.com/us/files_c ms/14-manuali/file/MU_6722_6742_EN.pdf [retrieved on 2018-09-13]

## Description

### TECHNICAL FIELD

The present invention generally relates to a method for controlling an electronic video door entry and/or home automation communication system and to an electronic system implementing said method.

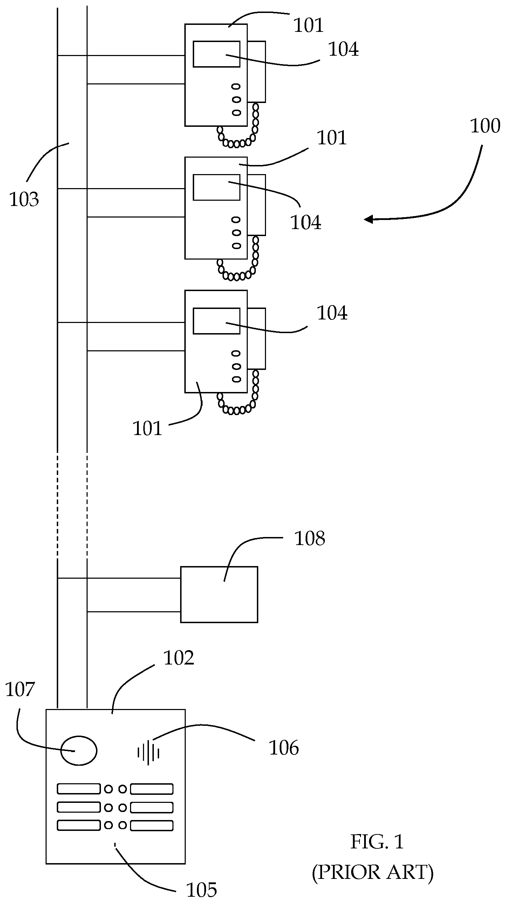

Traditional video door entry systems 100 of the type illustrated in Figure 1 comprise a plurality of indoor stations or indoor derivatives 101, in addition to at least one outdoor station 102, connected to a communication BUS 103, generally with two wires.

The term "indoor station" or "indoor derivative" 101 means a user apparatus, for example an intercom or a video door entry system, installable inside a housing unit, configured to make available an audio and/or video signal, received from an outdoor station 102, and to transmit a collected audio signal to the outdoor station 102.

The indoor stations 101 thus generally comprise an interface for collecting and reproducing the audio signal comprising at least one microphone for collecting an audio signal and a speaker for reproducing audio. In the case of a video door entry system, an interface is also provided for displaying video signals 104, such as a monitor, an LCD or a TFT, for reproducing the images detected by the outdoor stations 102 or a notification signal.

Similarly, the term "outdoor stations" 102 means generic user apparatuses applying externally to a building or to an apartment, which detected an audio and/or video signal, and make available an audio signal received from an indoor station 101. The outer stations 102 thus comprise an audio interface comprising at least a microphone 105 for collecting an audio signal and a speaker 106 for reproducing audio. In the case of a video door entry system, an interface is also provided for acquiring video signals, such as a television camera 107.

Both the indoor stations, 101, and the outdoor stations 102 are connected in parallel to the communication BUS 103, through which they exchange data, control signals and audio and video signals, in addition to receiving the power supply coming from electricity supply means 108, also connected to the BUS 103.

Generally, the power supplied by the power supply means 108 is sufficient to power the full functionality of one indoor station 101 at a time. Each indoor station 101 is thus sufficiently powered to operate with full functionality on the occasion of a call directed to it, so as to establish connection with the outdoor station 102. Otherwise, the indoor stations 101 are powered to assure stand-by operation.

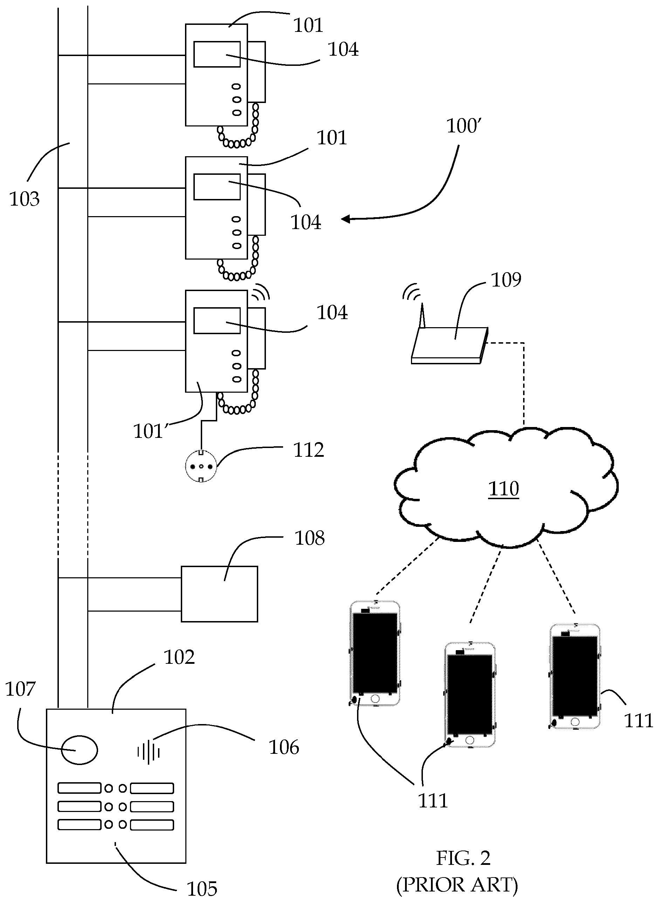

More sophisticated video door entry systems 100' (an example of which is illustrated in Fig. 2) are known, provided with one or more indoor stations 101' equipped with a wireless communication module and with an Internet interface module. These modules allow the indoor station 101' to establish a connection with a wireless local area network 109 and, through it, to access the Internet global network 110.

Through the Internet 110, the indoor stations 101' access an Internet portal that, after authentication, places in communication the indoor station with at least one user terminal 111, also configured to access the Internet, for example a smartphone or a PC. In this way the user is able to receive audio/video data transmitted by the indoor station 101' and to send control signals to it also remotely.

This particular video door entry system 100', however, requires the indoor stations 101' provided with wireless communication interface to be all simultaneously and constantly powered in order to keep active the wireless connection with the local area network 109. If the system comprises a plurality of indoor stations 101,101' connected to the communication BUS 103, for example in the case of a condominium, the power supply made available through the BUS 103 is not sufficient for this purpose.

Each indoor station 101' provided with wireless communication interface, in order to maintain active the communication with the wireless local area network 109, must therefore be connected directly to the electrical grid 112 of the building, making installation more laborious. In particular, the operation of replacing the traditional indoor station 101 with an indoor station 101' provided with wireless and Internet modules is particularly complex, requiring work on walls, directed at bringing the power supply wires to the installation point of the indoor station 101'. An example of such an indoor station 101' is the indoor station for residential audio and video communication systems already marketed by the Applicant under the tradename Mini ViP Monitor Art. 6742W, the user manual of which can be retrieved from the Internet at the URL: http://pro.comelitgroup.com/ 5 us/files cjms/14-manuali/file/MU 6722 6742 EN.pdf.

### PURPOSES AND SUMMARY OF THE INVENTION

In light of the above, the problem underpinning the present invention is to devise a method for controlling an electronic video door entry and/or home automation communication system able to operate the wireless and Internet modules even in the absence of a connection dedicated to the electrical power supply.

Within this problem, a purpose of the present invention is to provide a method for controlling an electronic video door entry and/or home automation communication system that allows to optimise the energy consumption of the indoor stations.

An additional purpose of the present invention is to study a method for controlling an electronic video door entry and/or home automation communication system that is able to transmit video calls to users' terminals within the times generally expected for a reply.

Another purpose of the present invention is to provide an electronic video door entry and/or home automation communication system that can be operated remotely through a user terminal, even in the absence of a connection dedicated to electrical power supply.

According to a first aspect, the invention thus relates to a method for controlling an electronic video door entry and/or home automation communication system comprising a plurality of indoor stations and at least one outdoor station, the indoor and the outdoor stations being connected to a communication BUS to which electric power supply means for remote supply of the stations are also connected, wherein at least one indoor station of the plurality of indoor stations comprises a control unit comprising at least one module for data exchange with the Internet and a wireless network connection module operatively connected to the module for data exchange with the Internet for the transmission of data to the Internet via a wireless network, the control method being characterized in that it comprises the steps consisting in:
- obtaining an authentication key having a finite validity time from an Internet portal for the communication with at least one user terminal;
- bringing the module for data exchange with the Internet and the wireless network connection module to a stand-by condition;
- setting a waiting time that is shorter than the validity time of the authentication key to the Internet portal;
- at the end of each waiting time:
   - reactivating the module for data exchange with the Internet and for connection to a wireless network;
   - accessing the Internet portal via the module for data exchange with the Internet; and
   - updating the authentication key to the Internet portal.

In the present description and in the claims that follow, the expression "stand-by" means the operating procedure of a processing module according to which at least a part of the processing operations of the module and the related peripherals are unpowered, determining reduced energy consumption, and the module is set to wait for a signal to switch from the condition of being at least partially inoperative to a fully operating mode characterized by increased energy consumption.

The Applicant has devised a method that assures an operation of the system in the absence of a power supply dedicated to the individual indoor station, albeit on one hand making available the functionalities offered by a connection with a wireless router with access to the Internet, and on the other hand without introducing appreciable delays in reply times.

The Applicant opted to maintain the data exchange modules with the Internet and the module for connection to a wireless network in a stand-by condition, deep or otherwise, in order to minimise electricity consumption in the absence of a video door entry call, thus making it superfluous to connect the indoor station to the electrical grid.

However, the stand-by condition of the two modules implies that the connection with the Internet portal through which the indoor stations are placed in communication with the user terminals is not maintained over time.

Consequently, it is necessary to restore the connection every time a video door entry call to the indoor station takes place.

The Applicant has observed that the restoration of the connection with the Internet portal according to the prior art requires times that are incompatible with the times generally expected by the initiator of the video door entry call, if an excessive delay is interpreted as a lack of reply by the user.

The Applicant thus studied how to reduce by as much as possible the times necessary for restoring the connection with the Internet portal.

In particular, the Applicant determined that if the authentication key assigned by the Internet portal to the module for the exchange of data with the Internet has expired, it is necessary to wait times of a few seconds to obtain a new valid key.

To eliminate this delay, the Applicant devised how to constantly maintain a valid key condition, regularly gaining access to the Internet portal, even in the absence of a video door entry call, before the validity of the previous key expires.

In this way, it is assured that on the occasion of a video door entry call the access key to the Internet portal is always valid, thus eliminating the wait times to obtain a new one.

According to a second aspect, the invention thus relates to an electronic video door entry and/or home automation communication system comprising a plurality of indoor stations and at least one outdoor station, the indoor stations and the outdoor station being connected to a communication BUS to which electric power supply means for remote supply of the stations are also connected, at least one indoor station of the plurality of indoor stations comprising a control unit that comprises at least one module for data exchange with the Internet and a wireless network connection module characterized in that the control unit is configured to implement the control method described above.

Advantageously, the electronic video door entry and/or home automation communication system achieves the technical effects described above in relation to the method for controlling an electronic video door entry and/or home automation communication system.

The present invention may have at least one of the preferred following features; the latter may in particular be combined with one another as desired in order to meet specific application needs.

Preferably, the control method additionally comprises the steps consisting in:
- at the end of each set waiting time, verifying the available power from the electric power supply means; and
- reactivating the module for data exchange with the Internet and the wireless network connection module if sufficient power is available to power the full functionality of an indoor station.

Advantageously, the Applicant has devised carrying out a check of the condition of the electrical power supply means before proceeding with the reactivation of the module for exchanging data with the Internet and the wireless network connection module. In this way, it is assured that the timed operations of updating the authentication key do not interfere with the operations of a second indoor station connected to the same communication BUS and powered through the same power supply means.

Preferably, the step comprising bringing the wireless network connection module in a stand-by condition comprises bringing the wireless network connection module in a deep-stand-by condition in which no connection to the wireless network is maintained.

In the present description and in the following claims, the expression "deep stand-by" means the operating mode of a processing module, whereby most of the processing operations of the module are shut down, including at least the transceiving operations and peripherals.

Bringing the module for connection to a wireless network to a deep stand-by condition it is possible further to reduce the consumption of the indoor station in non-operating condition, i.e. when no video door entry call is taking place.

More preferably, the step of reactivating the module for connection to a wireless network comprises:
- establishing a new connection with a wireless router to which it had previously been associated.

Still more preferably, the control method further comprises the step of storing a plurality of data related to a connection between the wireless network connection module and the wireless router, said data at least comprising the frequency band at which the connection takes place and the network address assigned by the wireless router to the wireless network connection module; wherein the step of establishing a new connection to the wireless router is made on the basis of the stored data.

Also preferably, the step of establishing a new connection to the wireless router comprises the step of identifying the frequency band for wireless communication at which the router is transmitting by starting the scanning of the available bands from the frequency band stored in the connection data.

Preferably, the step of establishing a new connection with the wireless router comprises the step of transmitting to the wireless router a message to check the availability of the network address stored in the connection data.

Advantageously, the applicant studied a procedure for reconnecting to the wireless router optimised in terms of times. For this purpose, advantageously, a series of data is reutilised, which are related to the previous condition of connection to the same router, including the frequency band at which the router transmitted, the IP address previously addressed by the router to the wireless network connection module and so on. The high probability that the same data are still usable makes, in most case, the connection procedure extremely rapid and streamlined, reducing it by several seconds.

Preferably, the control method comprises the step that consists in converting an analogue video coming from the outdoor station in digital format, in parallel to the step of establishing a new connection to the wireless router.

Advantageously, the parallel management of the digitisation of the video with respect to the resumption of the connection to the wireless router and subsequently to the Internet portal, allows to recover additional valuable fractions of a second for an optimised management of the transmission of the video call to the user terminal.

If the wireless network connection module is brought to a non-deep stand-by condition, the control method further comprises the steps that consist of:
- receiving, by the wireless network connection module, an activation signal transmitted by the user terminal through the Internet portal;
- verifying the available power from the electric power supply means; and
- reactivating the module for data exchange with the Internet in case sufficient power is available to power the full functionality of an indoor station.

Advantageously, if the wireless network connection module is brought to a non-deep stand-by condition, the calls initiated through the user terminal are managed in an optimised manner, to ensure that there is no interference with the operation of a second indoor station connected to the same communication BUS and powered through the same power supply means.

### BRIEF DESCRIPTION OF THE DRAWINGS

Further features and advantages of the present invention will be more evident from the following detailed description of certain preferred embodiments thereof made with reference to the appended drawings.

The different features in the individual configurations may be combined with one another as desired according to the preceding description, should there be advantages specifically resulting from a specific combination.

In such drawings,
- Figure 1 is a schematic representation of a first embodiment of a traditional video door entry system;
- Figure 2 is a schematic representation of a second embodiment of a traditional video door entry system;
- Figure 3 is a schematic representation of a preferred embodiment of a video door entry system according to the present invention;
- Figure 4 is a block diagram of a first embodiment of the control unit of an indoor station provided with wireless communication interface;
- Figure 5 is a block diagram of a second embodiment of the control unit of an indoor station provided with wireless communication interface;
- Figure 6 is a block diagram of the control method of an electronic video door entry and/or home automation communication system according to the present invention.

### DETAILED DESCRIPTION OF THE INVENTION

For the illustration of the drawings, use is made in the following description of identical numerals or symbols to indicate construction elements with the same function. Moreover, for clarity of illustration, certain references may not be repeated in all drawings.

While the invention is susceptible to various modifications and alternative constructions, certain preferred embodiments are shown in the drawings and are described hereinbelow in detail. It is in any case to be noted that there is no intention to limit the invention to the specific embodiment illustrated rather on the contrary, the invention intends covering all the modifications, alternative and equivalent constructions that fall within the scope of the invention as defined in the claims.

The use of "for example", "etc.", "or" indicates non-exclusive alternatives without limitation, unless otherwise indicated. The use of "comprises" and "includes" means "comprises or includes, but not limited to", unless otherwise indicated.

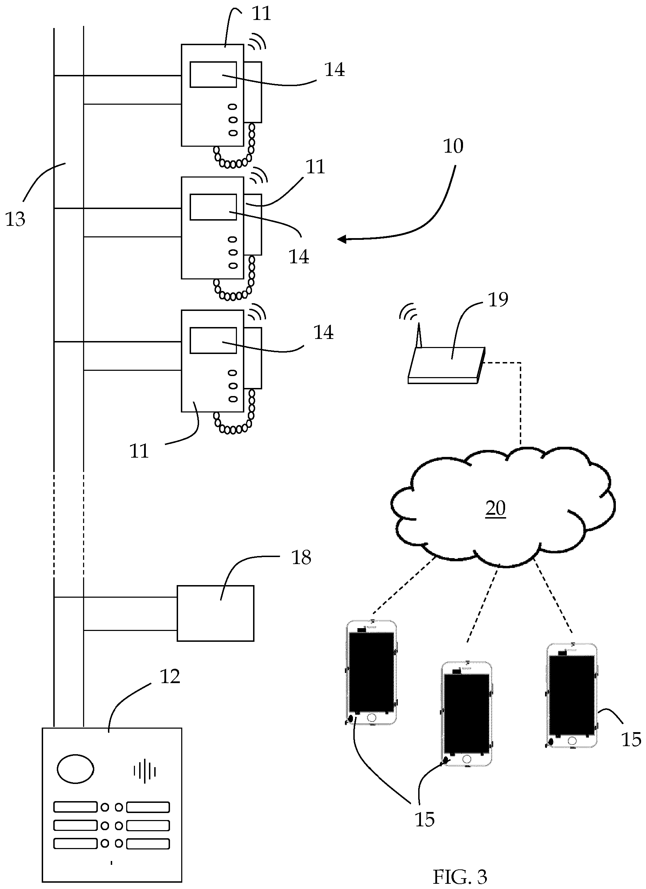

With reference to Figure 3, an embodiment is illustrated of an electronic video door entry and/or home automation communication system 10 comprising a plurality of indoor stations 11 provided with wireless communication interface in addition to at least one outdoor station 12. The indoor stations 11 and the outdoor station 12 of the system 10 are connected in parallel to a communication BUS 13, to which are also connected electrical power supply means 18 for the remote power supply of all stations 11,12.

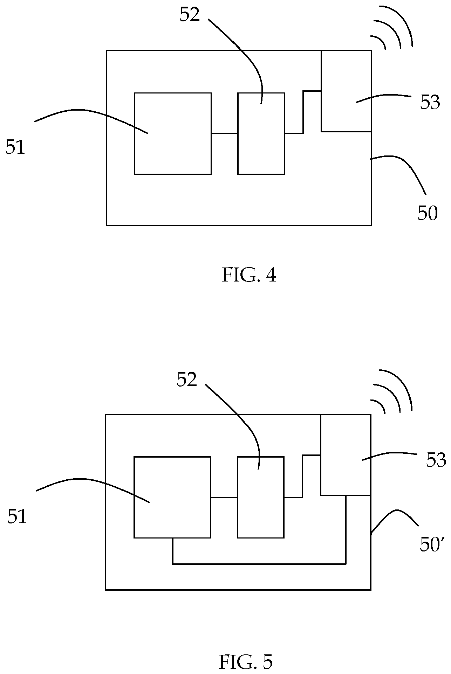

Figure 4 also shows a first embodiment of a control unit 50 of an indoor station 11 provided with wireless communication interface like the ones used in the system of Figure 3. The control unit 50 of Figure 4 comprises a module for data exchange with the Internet 52 and a wireless network connection module 53 operatively connected to the module for data exchange with the Internet 52 for the transmission of data to the Internet through a wireless network. For the management of these modules 52,53, a central processing module 51 is also provided.

Figure 5 shows a second embodiment of a control unit 50' of an indoor station 11 provided with wireless communication interface. In the control unit 50' of Figure 5, the central processing module 51 is directly connected to both the module for data exchange with the Internet 52 and the wireless network connection module 53.

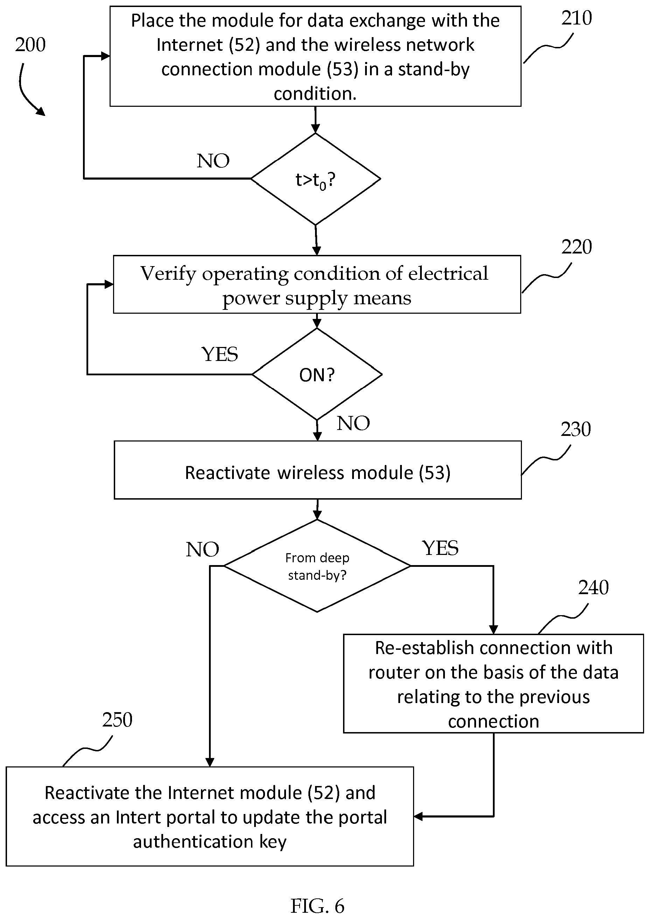

The method 200 for controlling an electronic video door entry and/or home automation communication system 10 is illustrated in general terms in Figure 6.

The method for controlling an electronic video door entry and/or home automation communication system 10 comprises first of all establishing a connection to a wireless router 19 in turn connected with the Internet 20.

Through the connection to the wireless router 19 the module for data exchange with the Internet 52 can access the Internet 20 and effect an access to an Internet portal of communication with at least one user terminal 15, obtained therefrom an authentication key with finite validity time.

Subsequently, both the module for data exchange with the Internet 52 and the wireless network connection module 53 are brought to a stand-by condition (step 210).

In particular, if the indoor station 11 is provided with a control unit 50 of the type of Figure 4, the wireless network connection module 53 is brought to a deep stand-by condition, in which no connection to the wireless router 19 is maintained.

In the central processing module 51, a waiting time is set in order periodically to awaken both the wireless network connection module 53, and the module for data exchange with the Internet 52.

At the end of each pre-set time, the central processing module 51 carries out a verification (step 220) of the power absorption that the electrical power supply means 18 connected to the communication BUS 13 are undergoing. If the electrical power supply means 18 are not already supplying power to another indoor station 11 connected to the BUS 13, both the module for data exchange with the Internet 52 and the wireless connection module 53 (steps 230 and 250). Otherwise, the awakening of the modules 52,53 is postponed by a pre-set time after which the central processing module 51 verifies again the availability of the electrical power supply means 18 to supply sufficient power to power the full functionality of an indoor station 11, namely if it is not already supplying power for the full functionality of a different indoor station 11 connected to the communication BUS 13.

Upon awakening, the wireless connection module 53 re-establishes the connection with the wireless router 19 with which it had previously been associated (step 240). In this way, at each awakening, the module for data exchange with the Internet 52 connects with the Internet portal, updating the authentication key with the portal or the validity thereof.

It is thus assured that, on the occasion of a video door entry call, the access key to the Internet portal is current and valid, making it superfluous to wait for the time necessary to the authentication for access to the portal in order to transfer the call to the user terminal 15. In this way, the times required for connection to the user terminal 15 are shortened.

In addition, for the connection to the router 19, a plurality of data is stored relating to the previously established connection between the wireless network connection module 53 and the router 19, including the frequency band in which the previous connection took place and the network address assigned by the router 19 to the wireless module 53 of the control unit 50 on the occasion of the previous connection.

The wireless network connection module 53 uses the stored data to accelerate the preparatory operations for connection with the router 19.

The scan of the frequency bands, necessary to identify the frequency band at which the router 19 is transmitting, is made to start from the frequency band used for the previous connection. If the router 19 is still available in that frequency band, the scanning operation is greatly shortened.

Once the connection with the router 19 is established, the wireless network connection module 53 transmits a message to the router 19 to verify the availability of the network address that had previously been assigned to it. If the address is available, the phase of negotiation with the router directed at the assignment of a network address becomes superfluous, thereby accelerating access to the network.

In parallel with the operations of connecting with the router 19, the module for data exchange with the Internet 52 proceeds to convert the analogue video coming from the outdoor station 12 into digital format and to generate the data packets to be transmitted. In this way, the times for transferring the video door entry call to the user terminal 15 are further optimised.

With reference to the control unit 50' of the type of Figure 5, the method for controlling an electronic video door entry and/or home automation communication system 10 comprises bringing both the module for data exchange with the Internet 52, and the wireless network connection module 53 to a stand-by condition. However in this case, the wireless network connection module 53 is brought to a non-deep stand-by condition, in which the connection with the wireless network 19 is maintained in existence.

This condition allows to manage, in addition to the video door entry calls initiated through the outdoor station 12, also the queries coming from the user terminals 15.

In this case, too, in the central processing module 51 a waiting time is set in order periodically to awaken the module for data exchange with the Internet 52.

At the end of each pre-set time, the central processing module 51 carries out a verification of the power absorption that the electrical power supply means 18 connected to the communication BUS 13 are undergoing.

If the electrical power supply means 18 are not already supplying power to another indoor station 11 connected to the BUS 13, the module for data exchange with the Internet 52 is activated to connect with the Internal portal for communication with the user terminals 15 to update the authentication key or the validity thereof. For this purpose the connection between the wireless network connection module 53 and the router 19 is already established.

Otherwise, the awakening of the module for data exchange with the Internet 52 is postponed by a pre-set time after which the central processing module 51 verifies again the availability of the electrical power supply means 18 to supply power.

Similarly, if the user terminal 15 transmits, through the Internet portal, an activation signal to the indoor station 11, this signal is received by the wireless network connection module 53, which forwards the signal directly to the central processing module 51.

Upon receipt of such an activation request signal, the central processing module 51 verifies the power absorption that the electrical power supply means 18 connected to the communication BUS 13 are undergoing.

If the electrical power supply means 18 are not already supplying power to another indoor station 11 connected to the BUS 13, the module for data exchange with the Internet 52 is activated, to establish the communication with the user terminal 15.

## Claims

1. Method (200) for controlling an electronic video door entry and/or home automation communication system configured for video door communication (10) comprising a plurality of indoor stations (11) and at least one outdoor station (12), the indoor stations (11) and the outdoor station (12) being connected to a communication BUS (13) to which electric power supply means (18) for remote supply of the stations (11, 12) are also connected, at least one indoor station (11) of the plurality of indoor stations (11) comprising a control unit (50,50') which comprises at least one module for data exchange with the Internet (52) and a wireless network connection module (53) operatively connected to the module for data exchange with the Internet (52) for the transmission of data to the Internet via a wireless network, the control method comprising the steps of:
- obtaining an authentication key having a given finite validity time from an Internet portal for the communication with at least one user terminal (15);
and being **characterized in that** it comprises the steps of:
- bringing (210) the module for data exchange with the Internet (52) and the wireless network connection module (53) in a stand-by condition;
- setting a waiting time that is shorter than the validity time of the authentication key to the Internet portal; and
- at the end of each set waiting time:
- checking (220) the power available from the electric power supply means (18);
- reactivating the module for data exchange with the Internet (52) and the wireless network connection module (53) in case sufficient power is available;
- accessing the Internet portal via the module for data exchange with the Internet (52); and
- updating the authentication key to the Internet portal.

2. Control method of an electronic video door entry and/or home automation communication system (10) according to claim 1, wherein the step comprising bringing the wireless network connection module (53) in a stand-by condition comprises bringing the wireless network connection module (53) in a deep-stand-by condition in which no connection to the wireless network is maintained.

3. Control method of an electronic video door entry and/or home automation communication system (10) according to claim 2, wherein the wireless network connection module (53) reactivation step comprises:
- establishing (240) a new connection to a wireless router (19) to which it had previously been associated.

4. Control method of an electronic video door entry and/or home automation communication system (10) according to claim 3, further comprising the step consisting in storing a plurality of data related to a connection between the wireless network connection module (53) and the wireless router (19), said data at least comprising the frequency band at which the connection takes place and the network address assigned by the wireless router (19) to the wireless network connection module (53), wherein the step of establishing a new connection to the wireless router (19) is made on the basis of the stored data.

5. Control method of an electronic video door entry and/or home automation communication system (10) according to claim 4, wherein the step of establishing a new connection to the wireless router (19) comprises:
- identifying the frequency band for wireless communication at which the router (19) is transmitting by starting the scanning of the available bands from the frequency band stored in the connection data.

6. Control method of an electronic video door entry and/or home automation communication system (10) according to claim 4 or 5, wherein the step of establishing a new connection to the wireless router (19) comprises:
- transmitting to the wireless router (19) a message to check the availability of the network address stored in the connection data.

7. Control method of an electronic video door entry and/or home automation communication system (10) according to any one of the claims from 3 to 6, comprising the step consisting in converting an analogue video coming from the outdoor station (12) in digital format, in parallel to the step of establishing a new connection to the wireless router (19).

8. Control method of an electronic video door entry and/or home automation communication system (10) according to claim 1, further comprising the steps consisting in:
- receiving, by the wireless network connection module (53), an activation signal transmitted by the user terminal (15) through the Internet portal;
- verifying the available power from the electric power supply means (18); and
- reactivating the module for data exchange with the Internet (52) in case sufficient power is available.

9. Electronic video door entry and/or home automation communication system (10) comprising a plurality of indoor stations (11) and at least one outdoor station (12), the indoor stations (11) and the outdoor station (12) being connected to a communication BUS (13) to which electric power supply means (18) for remote supply of the stations (11, 12) are also connected, at least one indoor station (11) of the plurality of indoor stations (11) comprising a control unit (50,50') which comprises at least one module for data exchange with the Internet (52) and a wireless network connection module (53) operatively connected to the module for data exchange with the Internet (52) for the transmission of data to the Internet via a wireless network **characterized in that** the control unit (50,50') is configured to implement the control method according to any one of the preceding claims.

## Patentansprüche

1. Verfahren (200) zur Steuerung eines elektronischen Video-Türöffnungs- und/oder Hausautomatisierungs-Kommunikationssystems, das für eine Video-Türkommunikation (10) mit einer Vielzahl von Innenstationen (11) und mindestens einer Außenstation (12) konfiguriert ist, wobei die Innenstationen (11) und die Außenstation (12) an einen Kommunikations-BUS (13) angeschlossen sind, an den auch elektrische Stromversorgungsmittel (18) zur Fernversorgung der Stationen (11, 12) angeschlossen sind, wobei mindestens eine Innenstation (11) der Vielzahl von Innenstationen (11) eine Steuereinheit (50, 50') umfasst, die mindestens ein Modul für den Datenaustausch mit dem Internet (52) und ein drahtloses Netzwerkverbindungsmodul (53) umfasst, das operativ mit dem Modul für den Datenaustausch mit dem Internet (52) für die Übertragung von Daten über ein drahtloses Netzwerk an das Internet verbunden ist, wobei das Steuerungsverfahren die folgenden Schritte umfasst:
- Beschaffung eines Authentifizierungsschlüssels mit einer bestimmten endlichen Gültigkeitsdauer von einem Internetportal für die Kommunikation mit mindestens einem Benutzerendgerät (15);
und **dadurch gekennzeichnet ist, dass** es die folgenden Schritte umfasst:
- Versetzen (210) des Moduls für den Datenaustausch mit dem Internet (52) und des drahtlosen Netzwerkverbindungsmodul (53) in einen Stand-by-Zustand;
- Einstellung einer Wartezeit, die kürzer als die Gültigkeitsdauer des Authentifizierungsschlüssels für das Internetportal ist; und
- am Ende jeder festgelegten Wartezeit:
- Prüfung (220) der von der Stromversorgungseinrichtung (18) verfügbaren Leistung;
- Reaktivieren des Moduls für den Datenaustausch mit dem Internet (52) und des drahtlosen Netzwerkverbindungsmoduls (53), wenn genügend Strom vorhanden ist;
- Zugriff auf das Internetportal über das Modul für den Datenaustausch mit dem Internet (52); und
- Aktualisieren des Authentifizierungsschlüssels für das Internetportal.

2. Steuerungsverfahren für ein elektronisches Video-Türöffnungs- und/oder Hausautomatisierungs-Kommunikationssystems (10) nach Anspruch 1, wobei der Schritt, der das Versetzen des drahtlosen Netzwerkverbindungsmoduls (53) in einen Stand-by-Zustand umfasst, das Versetzen des drahtlosen Netzwerkverbindungsmoduls (53) in einen tiefen Stand-by-Zustand umfasst, in dem keine Verbindung zum drahtlosen Netzwerk aufrechterhalten wird.

3. Steuerungsverfahren für ein elektronisches Video-Türöffnungs- und/oder Hausautomatisierungs-Kommunikationssystem (10) nach Anspruch 2, wobei der Schritt der Reaktivierung des drahtlosen Netzwerkverbindungsmoduls (53) umfasst:
- Aufbau (240) einer neuen Verbindung zu einem drahtlosen Router (19), mit dem es zuvor verbunden war.

4. Steuerungsverfahren für ein elektronisches Video-Türöffnungs- und/oder Hausautomatisierungs-Kommunikationssystems (10) nach Anspruch 3, das ferner den Schritt umfasst, der darin besteht, eine Vielzahl von Daten zu speichern, die sich auf eine Verbindung zwischen dem drahtlosen Netzwerkverbindungsmodul (53) und dem drahtlosen Router (19) beziehen, wobei die Daten zumindest das Frequenzband, in dem die Verbindung stattfindet, und die Netzwerkadresse umfassen, die dem drahtlosen Netzwerkverbindungsmodul (53) von dem drahtlosen Router (19) zugewiesen wird, wobei der Schritt des Aufbaus einer neuen Verbindung zu dem drahtlosen Router (19) auf der Grundlage der gespeicherten Daten erfolgt.

5. Steuerungsverfahren für ein elektronisches Video-Türöffnungs- und/oder Hausautomatisierungs-Kommunikationssystem (10) nach Anspruch 4, wobei der Schritt des Aufbaus einer neuen Verbindung mit dem drahtlosen Router (19) umfasst:
- Identifizieren des Frequenzbandes für die drahtlose Kommunikation, auf dem der Router (19) sendet, indem das Scannen der verfügbaren Bänder ausgehend von dem in den Verbindungsdaten gespeicherten Frequenzband gestartet wird.

6. Steuerungsverfahren für ein elektronisches Video-Türöffnungs- und/oder Hausautomatisierungs-Kommunikationssystem (10) nach Anspruch 4 oder 5, wobei der Schritt des Aufbaus einer neuen Verbindung mit dem drahtlosen Router (19) umfasst:
- Übermitteln einer Nachricht an den drahtlosen Router (19), um die Verfügbarkeit der in den Verbindungsdaten gespeicherten Netzwerkadresse zu prüfen.

7. Steuerungsverfahren für ein elektronisches Video-Türöffnungs- und/oder Hausautomations-Kommunikationssystems (10) nach einem der Ansprüche 3 bis 6, das außerdem den Schritt umfasst, der darin besteht, parallel zum Schritt des Aufbaus einer neuen Verbindung zum drahtlosen Router (19) ein von der Außenstation (12) kommendes analoges Video in ein digitales Format umzuwandeln.

8. Steuerungsverfahren für ein elektronisches Video-Türöffnungs- und/oder Hausautomatisierungs-Kommunikationssystem (10) nach Anspruch 1, das außerdem die folgenden Schritte umfasst:
- Empfangen eines vom Benutzerterminal (15) über das Internetportal übertragenen Aktivierungssignals durch das drahtlose Netzwerkverbindungsmodul (53);
- Überprüfen der verfügbaren Leistung von der Stromversorgungseinrichtung (18); und
- Reaktivieren des Moduls für den Datenaustausch mit dem Internet (52), wenn genügend Strom vorhanden ist.

9. Elektronisches Video-Türöffnungs- und/oder Hausautomatisierungs-Kommunikationssystem (10) mit einer Vielzahl von Innenstationen (11) und mindestens einer Außenstation (12), wobei die Innenstationen (11) und die Außenstation (12) an einen Kommunikations-BUS (13) angeschlossen sind, an den auch elektrische Stromversorgungsmittel (18) zur Fernversorgung der Stationen (11, 12) angeschlossen sind, wobei mindestens eine Innenstation (11) der Vielzahl von Innenstationen (11) eine Steuereinheit (50,50') umfasst, die mindestens ein Modul für den Datenaustausch mit dem Internet (52) und ein mit dem Modul für den Datenaustausch mit dem Internet (52) operativ verbundenes drahtloses Netzwerkverbindungsmodul (53) für die Übertragung von Daten über ein drahtloses Netzwerk zum Internet umfasst, **dadurch gekennzeichnet, dass** die Steuereinheit (50, 50') derart konfiguriert ist, dass sie das Steuerungsverfahren nach einem der vorhergehenden Ansprüche implementiert.

## Revendications

1. - Procédé (200) de commande d'un système de communication domotique et/ou de portier vidéo électronique configuré pour une communication de portier vidéo (10) comprenant une pluralité de stations intérieures (11) et au moins une station extérieure (12), les stations intérieures (11) et la station extérieure (12) étant connectées à un BUS de communication (13) auquel des moyens d'alimentation électrique (18) pour l'alimentation à distance des stations (11, 12) sont également connectés, au moins une station intérieure (11) de la pluralité de stations intérieures (11) comprenant une unité de commande (50, 50') qui comprend au moins un module d'échange de données avec l'Internet (52) et un module de connexion réseau sans fil (53) connecté de manière fonctionnelle au module d'échange de données avec l'Internet (52) pour la transmission de données à l'Internet par l'intermédiaire d'un réseau sans fil, le procédé de commande comprenant les étapes suivantes :
- obtenir une clé d'authentification ayant une durée de validité finie donnée à partir d'un portail Internet pour la communication avec au moins un terminal d'utilisateur (15) ;
et étant **caractérisé par le fait qu'**il comprend les étapes suivantes :
- mettre (210) le module d'échange de données avec l'Internet (52) et le module de connexion réseau sans fil (53) dans un état de veille ;
- définir un temps d'attente qui est plus court que la durée de validité de la clé d'authentification sur le portail Internet ; et
- à la fin de chaque temps d'attente défini :
- vérifier (220) la puissance disponible à partir des moyens d'alimentation électrique (18) ;
- réactiver le module d'échange de données avec l'Internet (52) et le module de connexion réseau sans fil (53) dans le cas où une puissance suffisante est disponible ;
- accéder au portail Internet par l'intermédiaire du module d'échange de données avec l'Internet (52) ; et
- mettre à jour la clé d'authentification sur le portail Internet.

2. - Procédé de commande d'un système de communication domotique et/ou de portier vidéo électronique (10) selon la revendication 1, dans lequel l'étape comprenant la mise du module de connexion réseau sans fil (53) dans un état de veille comprend la mise du module de connexion réseau sans fil (53) dans un état de veille profonde dans lequel aucune connexion au réseau sans fil n'est maintenue.

3. - Procédé de commande d'un système de communication domotique et/ou de portier vidéo électronique (10) selon la revendication 2, dans lequel l'étape de réactivation du module de connexion réseau sans fil (53) comprend :
- établir (240) une nouvelle connexion à un routeur sans fil (19) auquel il avait été précédemment associé.

4. - Procédé de commande d'un système de communication domotique et/ou de portier vidéo électronique (10) selon la revendication 3, comprenant en outre l'étape consistant à stocker une pluralité de données relatives à une connexion entre le module de connexion réseau sans fil (53) et le routeur sans fil (19), lesdites données comprenant au moins la bande de fréquences à laquelle la connexion a lieu et l'adresse réseau affectée par le routeur sans fil (19) au module de connexion réseau sans fil (53), dans lequel l'étape d'établissement d'une nouvelle connexion au routeur sans fil (19) est réalisée sur la base des données stockées.

5. - Procédé de commande d'un système de communication domotique et/ou de portier vidéo électronique (10) selon la revendication 4, dans lequel l'étape d'établissement d'une nouvelle connexion au routeur sans fil (19) comprend :
- identifier la bande de fréquences pour une communication sans fil à laquelle le routeur (19) transmet en commençant le balayage des bandes disponibles à partir de la bande de fréquences stockée dans les données de connexion.

6. - Procédé de commande d'un système de communication domotique et/ou de portier vidéo électronique (10) selon la revendication 4 ou 5, dans lequel l'étape d'établissement d'une nouvelle connexion au routeur sans fil (19) comprend :
- transmettre, au routeur sans fil (19), un message pour vérifier la disponibilité de l'adresse réseau stockée dans les données de connexion.

7. - Procédé de commande d'un système de communication domotique et/ou de portier vidéo électronique (10) selon l'une quelconque des revendications 3 à 6, comprenant l'étape consistant à convertir une vidéo analogique provenant de la station extérieure (12) en format numérique, en parallèle avec l'étape d'établissement d'une nouvelle connexion au routeur sans fil (19).

8. - Procédé de commande d'un système de communication domotique et/ou de portier vidéo électronique (10) selon la revendication 1, comprenant en outre les étapes consistant à :
- recevoir, par le module de connexion réseau sans fil (53), un signal d'activation transmis par le terminal d'utilisateur (15) par l'intermédiaire du portail Internet ;
- vérifier la puissance disponible à partir des moyens d'alimentation électrique (18) ; et
- réactiver le module d'échange de données avec l'Internet (52) dans le cas où une puissance suffisante est disponible.

9. - Système de communication domotique et/ou de portier vidéo électronique (10) comprenant une pluralité de stations intérieures (11) et au moins une station extérieure (12), les stations intérieures (11) et la station extérieure (12) étant connectées à un BUS de communication (13) auquel des moyens d'alimentation électrique (18) pour l'alimentation à distance des stations (11, 12) sont également connectés, au moins une station intérieure (11) de la pluralité de stations intérieures (11) comprenant une unité de commande (50, 50') qui comprend au moins un module d'échange de données avec l'Internet (52) et un module de connexion réseau sans fil (53) connecté de manière fonctionnelle au module d'échange de données avec l'Internet (52) pour la transmission de données à l'Internet par l'intermédiaire d'un réseau sans fil, **caractérisé par le fait que** l'unité de commande (50, 50') est configurée pour mettre en oeuvre le procédé de commande selon l'une quelconque des revendications précédentes.
